# FASCICULE DE BREVET EUROPEEN

(11) **EP 0 734 657 B1**
(45) Date de publication et mention de la délivrance du brevet: **04.09.2002**
(21) Numéro de dépôt: 96400644.9
(22) Date de dépôt: 27.03.1996
(51) Int. Cl.: A23L 1/317, A23P 1/12

(54) **Produit alimentaire et son procédé de fabrication**
Nahrungsmittel und Verfahren zur Herstellung
Foodstuff and its fabrication process

(30) Priorité: 28.03.1995 FR 9503620
(43) Date de publication de la demande: 02.10.1996
(73) Titulaire: LUISSIER S.A., F-78220 Viroflay (FR)
(72) Inventeur: Chauvin, Bernard, 49150 Bauge (FR)
(74) Mandataire: Hurwic, Aleksander

(56) Documents cités:
- EP-A- 0 183 601
- DE-U- 8 505 466
- DE-U- 8 908 195
- FR-A- 956 849
- FR-A- 2 121 792
- FR-A- 2 584 577
- GB-A- 2 201 877
- NL-A- 6 710 866
- US-A- 3 511 669
- US-A- 3 634 102
- US-A- 5 091 198

## Description

La présente invention se rapporte principalement à un produit alimentaire, notamment à un saucisson sec, et à son procédé de fabrication.

La forme à section sensiblement circulaire, notamment cylindrique, est conférée au saucisson sec de type connu, par une opération d'embossage correspondant au poussage d'une mêlée de viande dans un boyau.

Les procédés de fabrication traditionnels de saucisson sec présentent de nombreux inconvénients. Le saucisson sec traditionnel présente un faible rapport R de sa surface externe par rapport à son volume. Ainsi qu'il ressort du tableau 1, le rapport R est par exemple égal à 0,350 pour une saucisse sèche fine de 120 mm de long, de 12 mm de diamètre pour un poids de 15 g environ, alors qu'il est égal à 0,105 pour un saucisson traditionnel dit ménage de 260 g environ et que ce rapport R est égal à 0,057 pour un saucisson sec gros format tel qu'un varzi de 2 500 g environ.

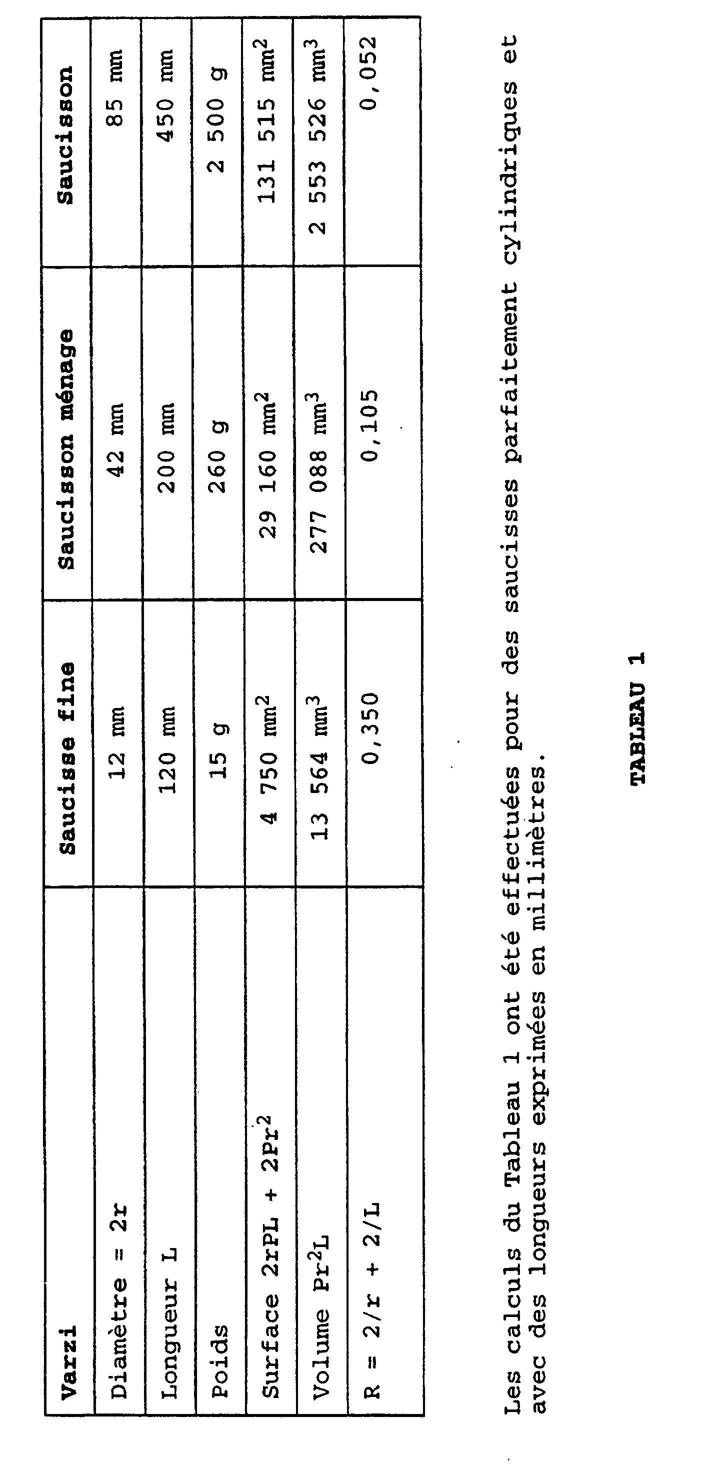

Les temps de sèche d'un tel saucisson sont respectivement de 6 jours, 35 jours et 72 jours, ce qui entraîne des coûts importants, notamment par suite de consommation énergétique et d'occupation de l'outil de production, notamment de la salle d'étuvage. Durant un temps de sèche aussi long, il n'est pas possible d'empêcher la formation d'une flore de surface imposant l'utilisation d'un boyau de protection. De plus, à la fin de la phase de séchage, le taux d'humidité diminue radialement en allant de l'axe vers la périphérie du saucisson de type connu ; la composition physico-chimique du saucisson n'est pas homogène.

Il est nécessaire de trancher le saucisson et d'enlever la peau préalablement à la dégustation. Pour beaucoup de saucisson, les tranches doivent être fines, sous peine de compromettre les qualités organoleptiques du saucisson.

FR-956 849 décrit un saucisson séché à l'air dont le diamètre varie entre 1 mm et 20 mm. Toutefois, ce document ne révèle pas les moyens mis en oeuvre pour assurer la fabrication d'un saucisson sec de 1 mm de diamètre.

C'est par conséquent un but de la présente invention d'offrir un procédé de fabrication, notamment de saucisson sec, comportant une étape de dessiccation rapide.

C'est également un but de la présente invention d'offrir un procédé de fabrication de saucisson sans flore de surface.

C'est aussi un but de la présente invention d'offrir un procédé de fabrication de saucisson sans peau ni boyau.

C'est également un but de la présente invention d'offrir un procédé de fabrication d'un produit alimentaire homogène.

C'est également un but de la présente invention d'offrir un procédé de fabrication d'un produit alimentaire susceptible de se conserver pendant de longues périodes.

C'est aussi un but de la présente invention d'offrir un produit alimentaire, notamment un saucisson ayant des formes nouvelles.

C'est également un but de la présente invention d'offrir un saucisson prêt à consommer ayant une épaisseur constante.

Ces buts sont atteints selon la présente invention par un procédé de fabrication d'un produit alimentaire, notamment d'un saucisson par extrusion d'un profilé de mêlée présentant un grand rapport surface externe/volume, notamment d'une bande de mêlée de faible épaisseur et de grande longueur. Après fermentation et dessiccation de la mêlée, on obtient un saucisson prêt à consommer.

L'invention a principalement pour objet un procédé de fabrication d'un produit alimentaire comportant une étape d'extrusion d'un profilé non cylindrique présentant un rapport R de la surface exprimée en mm² sur le volume exprimé en mm³ supérieur ou égal à 0,4 suivie par une étape ultérieure de fermentation du produit de la bande extrudée caractérisé en ce que l'étape d'extrusion est une étape de coextrusion d'une pluralité de produits de nature différente.

L'invention a également pour objet un procédé, caractérisé en ce que le profilé extrudé forme une bande allongée de grande longueur L et de faible épaisseur E.

L'invention a également pour objet un procédé, caractérisé en ce que l'on extrude un produit à base de viande.

L'invention a également pour objet un procédé, caractérisé en ce qu'il comporte une étape de dessiccation du profilé ou de la bande extrudé.

L'invention a également pour objet un procédé, caractérisé en ce que la fermentation s'effectue dans une étuve.

L'invention a également pour objet un procédé, caractérisé en ce que la dessiccation est obtenue par soufflage d'un flux d'air parallèlement et/ou tangentiellement à la surface d'au moins une des faces principales du profilé ou de la bande extrudé disposées à l'horizontale.

L'invention a également pour objet un procédé, caractérisé en ce que les étapes de fermentation et de dessiccation ont une durée comprise entre 10 et 72 heures, de manière à éviter l'apparition d'une flore de surface.

L'invention a également pour objet un procédé, caractérisé en ce qu'il comporte en outre une étape de cuisson.

L'invention a également pour objet un procédé, caractérisé en ce que ledit procédé est un procédé de fabrication en continue.

L'invention a également pour objet un procédé, caractérisé en ce qu'on coextrude une pluralité de bandes coplanaires qui, après solidarisation, forment une bande de plus grande largeur I.

L'invention a également pour objet un procédé, caractérisé en ce qu'on coextrude une pluralité de bandes superposées formant une structure laminaire.

L'invention a également pour objet un produit alimentaire obtenu par découpe d'un profilé extrudé non cylindrique, dont le rapport R de sa surface exprimé en mm² à son volume exprimé en mm³ est supérieur ou égal à 0,4 de préférence compris entre 0,6 et 0,8, par exemple égal à 0,65 ou à 0,7 et en ce que la matière extrudée du profilé a subi une fermentation et/ou une acidification permettant son raffermissement caractérisé en ce que la matière extrudée comprend une pluralité de produits de natures différentes.

L'invention a également pour objet un produit alimentaire, caractérisé en ce que le profilé est une bande de grande longueur L et de faible épaisseur E.

L'invention a également pour objet un produit alimentaire, caractérisé en ce que la bande de mêlée a une épaisseur comprise entre 2 mm et 10 mm, par exemple égale à 4 mm ou 7 mm.

L'invention a également pour objet un produit alimentaire, caractérisé en ce que ledit produit est un saucisson.

L'invention a également pour objet un saucisson, caractérisé en ce que ledit saucisson est un saucisson sec ayant subi une dessiccation avec perte d'humidité de 35 à 45 % en poids.

L'invention a également pour objet un saucisson, caractérisé en ce que ledit saucisson est un saucisson mi-sec ayant subi une dessiccation avec perte d'humidité de 18 à 25 % en poids.

L'invention a également pour objet un saucisson, caractérisé en ce qu'il est dépourvu de flores de surface.

L'invention a également pour objet un saucisson, caractérisé en ce qu'il n'est pas recouvert d'une peau ou d'un boyau.

L'invention a également pour objet un saucisson, caractérisé en ce qu'il est emballé sous vide ou sous un gaz neutre dans un emballage étanche.

L'invention sera mieux comprise au moyen de la description ci-après et des figures annexées données comme des exemples et sur lesquels :
- la figure 1 est une vue en perspective d'un saucisson de type connu ;
- la figure 2 est une vue en perspective d'un produit alimentaire selon la présente invention ;
- la figure 3 est un schéma synoptique d'une installation susceptible d'être mise en oeuvre dans le procédé selon la présente invention ;
- la figure 4 est une vue en perspective d'une extrudeuse de la figure 3;
- la figure 5 est un schéma d'une variante de réalisation de l'extrudeuse de la figure 4 ;
- la figure 6 est une vue schématique en coupe d'une étuve de type connu ;
- la figure 7 est une vue schématique en coupe d'une étuve susceptible d'être mise en oeuvre pour la sèche de saucisson selon la présente invention.

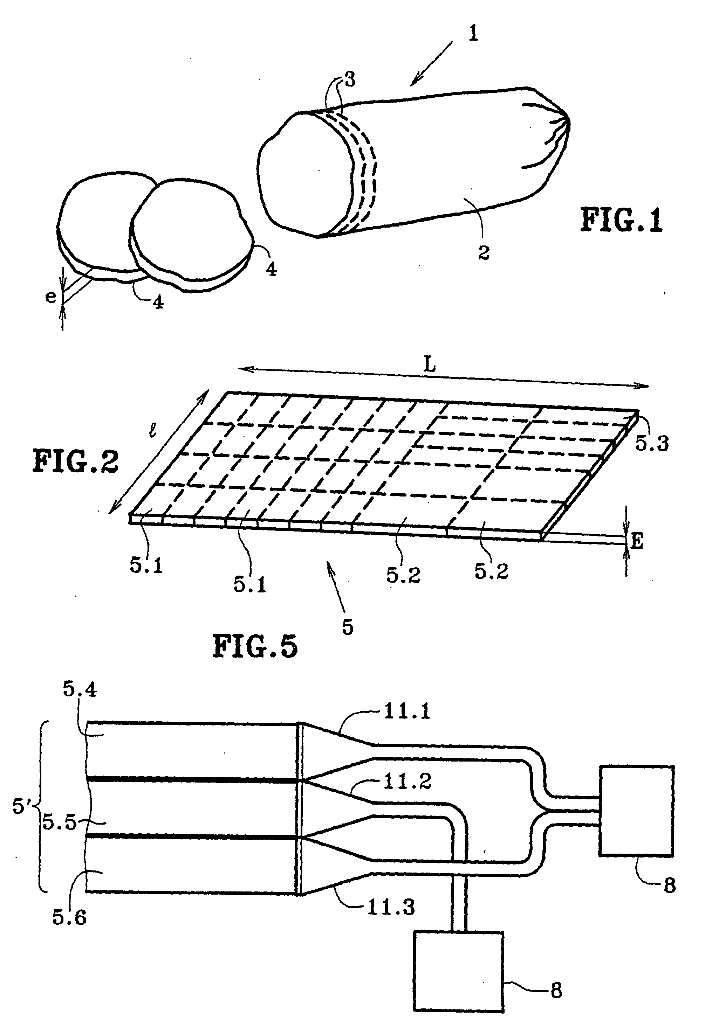

Sur les figures 1 à 7, on a utilisé les mêmes références pour désigner les mêmes éléments.

Sur la figure 1, on peut voir un saucisson traditionnel 1 dit ménage formé d'une chair fermentée-séchée enveloppée dans une peau 2, typiquement dans un boyau. L'apparition d'une flore de surface étant inévitable, lors de l'étape de dessiccation prolongée, pour en contrôler l'évolution, on ensemence la peau avec des germes de moisissure sélectionnés. Pour obtenir une chair de saucisson propre, on enlève avant ou après le tranchage, la peau 2 portant sur sa face externe la flore de surface.

Le tranchage selon des lignes pointillées 3 permet d'obtenir des tranches 4 dont l'épaisseur e est variable et dépend de la distance entre les traits 3 successifs et dont la forme est définie par la surface externe du saucisson 1.

Sur la figure 2, on peut voir un saucisson sec selon l'invention formant une bande de grande longueur L, ayant une épaisseur E, par exemple comprise entre 2 mm et 10 mm, de préférence entre 3 mm et 7 mm, par exemple égale à 4 mm ou 7 mm et une largeur I, par exemple comprise entre 10 mm et 120 mm. En fin de sèche, la bande 5 est avantageusement découpée en portions, par exemple en carrés canapés 5.1, en rectangles 5.2 ou en bâtonnets allongés 5.3 dits sticks apéritifs.

La géométrie du saucisson selon l'invention permet, pour un volume donné, d'optimiser le séchage par une augmentation du rapport R de la surface/volume. Il est à noter que pour un produit extrudé, une filière circulaire engendrant un saucisson cylindrique correspond, à volume constant, au rapport R le plus défavorable.

La géométrie de la bande 5 permet un séchage rapide qui peut être conduit de manière à éviter l'apparition de flore de surface, notamment de moisissure. Avantageusement, le saucisson 5 est dépourvu de peau, ce qui le rend directement consommable après l'ouverture d'un éventuel emballage. Toutefois, il est bien entendu que des saucissons 5 en bandes munis d'une peau (non représentée) ne sortent pas du cadre de la présente invention. Il est même possible d'ensemencer une telle peau avec une flore sélectionnée, par exemple pour se rapprocher de l'aspect du saucisson traditionnel. En fin de cycle de fabrication, le saucisson en bandes 5 selon l'invention est extrêmement homogène sur toute la longueur L, largeur I et épaisseur E de la bande, notamment en ce qui concerne le taux d'humidité. Par exemple, pour un saucisson sec en fin de sèche présentant une longueur L de 220 mm, une largeur I de 60 mm et une épaisseur E de 4 mm, ayant subi une sèche de 36 h, on a pu mesurer un taux d'humidité de 32,8 % dans les angles et un taux d'humidité de 36,4 % au centre de la bande, ce qui correspond à un rapport de 1,1. Au contraire, un saucisson dit ménage ayant subi une sèche de 840 h présente un taux d'humidité de 37 % en poids correspondant à un taux d'humidité de 30,21 % en poids pour la partie périphérique sur 5 mm d'épaisseur et un taux de 45,25 % en poids pour la partie centrale restante, ce qui correspond à un rapport de 1,50.

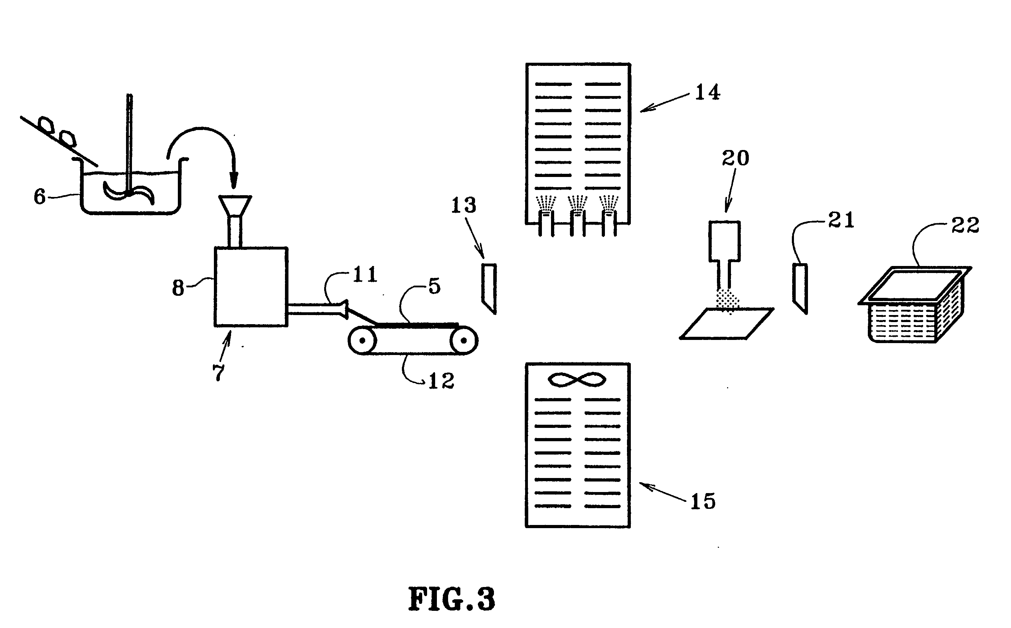

Sur la figure 3, on a illustré schématiquement le procédé selon la présente invention.

En 6, on prépare la mêlée. On choisit tout d'abord la formulation, c'est-à-dire la recette dans laquelle entreront les matières viandes, de porc principalement, avec la partie matière protéique contenue de façon dominante dans les morceaux maigres d'une carcasse, tels que jambon ou épaule, et la partie matière grasse contenue principalement dans les morceaux gras d'une carcasse, tels que bardière, poitrine mi-grasse. Pour la fabrication de saucisson sec n'ayant pas la dénomination "pur porc", il est possible d'utiliser en particulier pour la partie maigre des morceaux venant d'autres espèces animales, comme par exemple boeuf, cheval, âne, sanglier, volailles.

Dans la formulation, nous trouverons aussi les matières classées en ingrédients et additifs avec : les épices, notamment sel, poivre, muscade, ail, etc.., des arômes naturels, des aromates, notamment thym, girofle, des conservateurs, notamment ascorbate de sodium, salpêtre des sucres ayant la particularité d'être fermentescibles, puis enfin des ferments lactiques contenus naturellement dans la viande ou le plus souvent ajoutés lors de la fabrication de la mêlée.

La définition d'une mêlée dans sa composition en matière grasse peut aller, par exemple, de quelques 2 à 3 % de matière grasse jusqu'à 40 - 45 % de son poids fabriqué. Nous pouvons avoir des mêlées entrant plus directement dans une classification de viandes séchées dans le sens maigre que sous-entend le terme de "viande séchée".

Il est avantageux, notamment pour des petites pièces, d'acidifier partiellement la mêlée, par exemple par ajout d'un acide organique tel que l'acide lactique, avant l'extrusion.

Nous pourrions aussi obtenir de cette même technique de préparation des mêlées, des compositions très différentes par les matières premières utilisées et l'ensemble des composants d'une recette. On peut par exemple faire une mêlée maigre ou grasse faite de chair de poissons.

Une mêlée peut comporter de 2 à plusieurs dizaines de composants. Par exemple, des mêlées à 2-3 composants sont considérées comme des mêlées simples alors que les mêlées comportant entre 10 et 20 composants sont beaucoup plus élaborées.

Avantageusement, la préparation mécanique d'une mêlée se fera à partir de matières premières froides à température légèrement négative de l'ordre de - 3 à - 5°C.

Avantageusement, on met en oeuvre une cutter, composée le plus souvent d'un bol rotatif à l'horizontale dans lequel tourne, perpendiculairement au fond de ce bol, un jeu de couteaux montés à la verticale et répartis en étoile autour de l'arbre mécanique entraînant leur rotation.

Cet ensemble en mouvement, fixe ou variable, va permettre de trancher, de découper les matières premières maigres et gras, auxquelles on rajoutera, rapidement dans les premiers temps de l'opération, tous les ingrédients et additifs entrant dans la composition de la mêlée. La cutter aura donc une fonction de découpage, de réduction en morceaux fins, tout en contribuant efficacement à la fonction de mélange de l'ensemble des matières.

La fabrication peut aussi se faire avec un hachoir appelé communément broyeur pour la découpe et la réduction en grains de bonne taille, des maigres et des gras entrant dans la formulation.

Un mélangeur monté à la sortie du broyeur permet d'améliorer de manière substantielle l'homogénéité de la mêlée. En variante, on utilise, de façon combinée, une cutter, un hachoir, et/ou un mélangeur.

Comme on le fait dans une fabrication de saucisson sec traditionnel, la mêlée préparée sortant à une température négative, peut être entreposée, dans des bacs protégés par mesure d'hygiène, en chambre froide à une température comprise, par exemple, entre - 3°C et + 3°C. A l'étape 7, on effectue l'extrusion de la mêlée. La mêlée est soit introduite dans une extrudeuse, directement ou après un report dans le temps de quelques heures, à plusieurs dizaines d'heures.

La mêlée peut recevoir des produits complémentaires comme des brisures de noix, des mélanges d'épices chorizo, des olives, de l'arôme naturel de viande séchée ou autres. La composition de quatre exemples de mêlées susceptibles d'être mises en oeuvre dans le saucisson selon la présente invention, est donnée dans le tableau 2.

Les propriétés physiques de ces mêlées sont données dans le tableau 3. Il est à noter que le saucisson ménage correspond à la mêlée traditionnellement utilisée pour la fabrication de saucisson de type connu. Toutefois, selon la présente invention, on évite avantageusement l'ensemencement du saucisson par des germes de flore de surface. Il est à noter que l'ajout des épices chorizo acidifie la mêlée et que le faible taux de matières grasses animales de la mêlée fraîche aux noix (15 %) résultent de la dilution par addition de 5 % d'ingrédients.

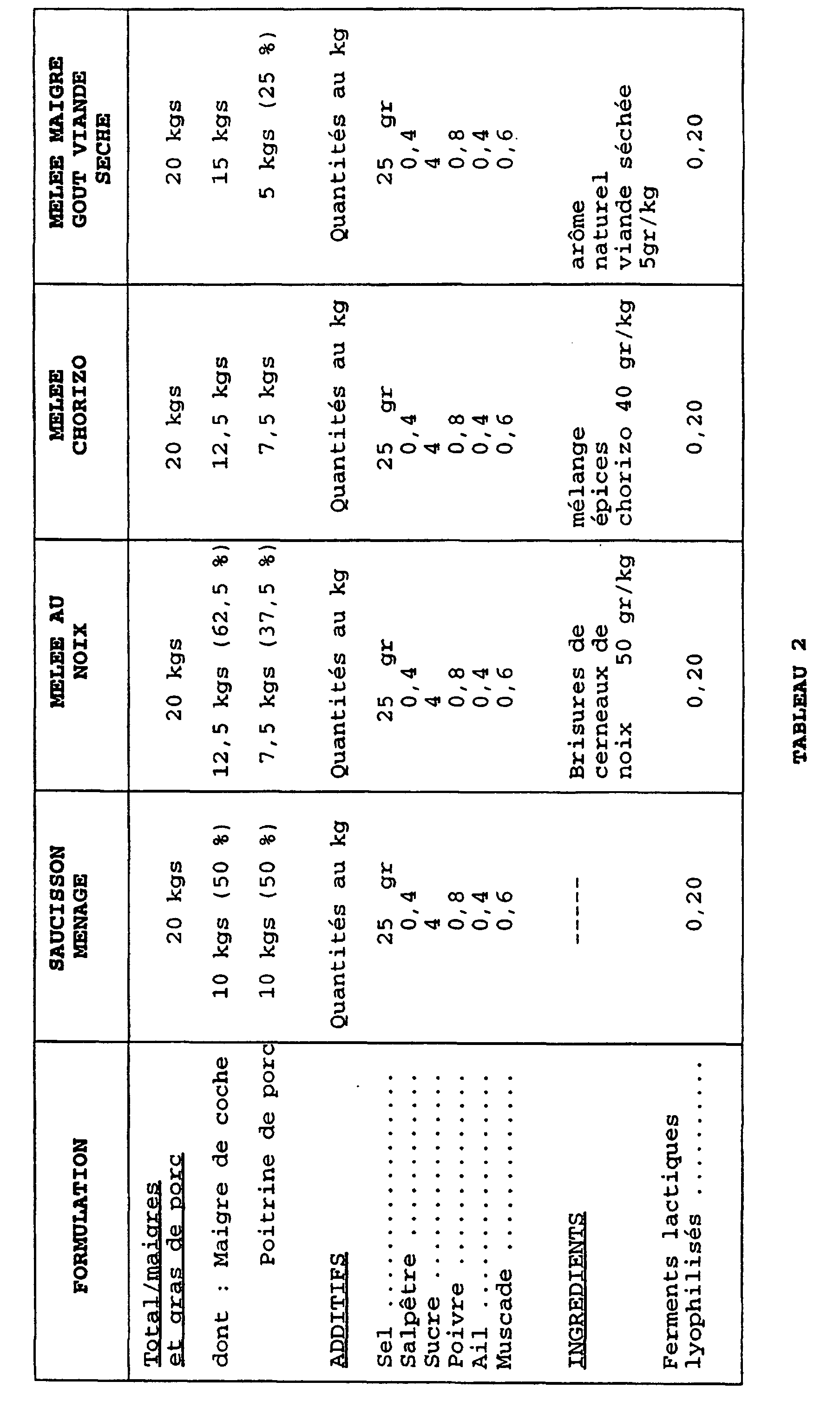

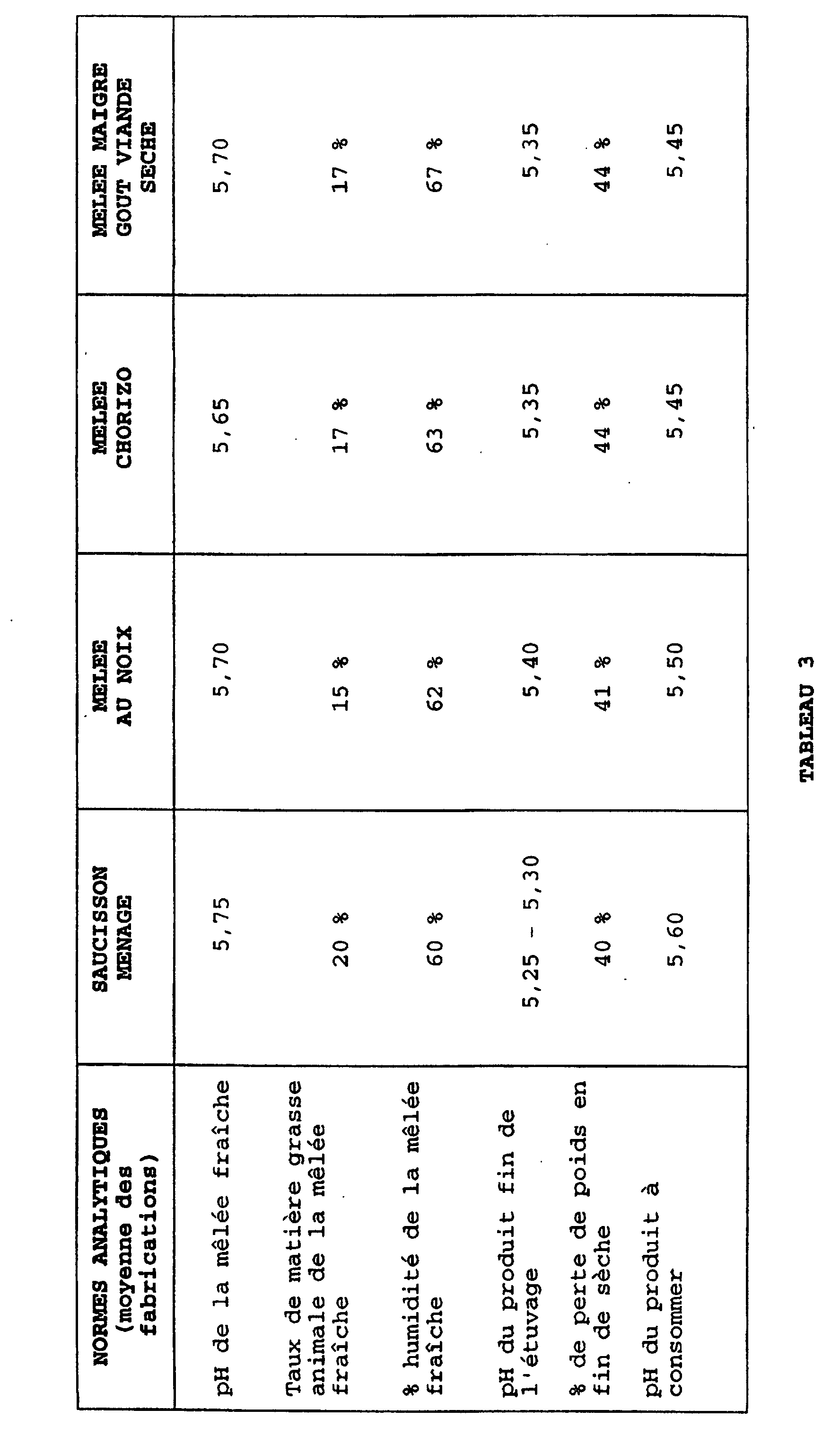

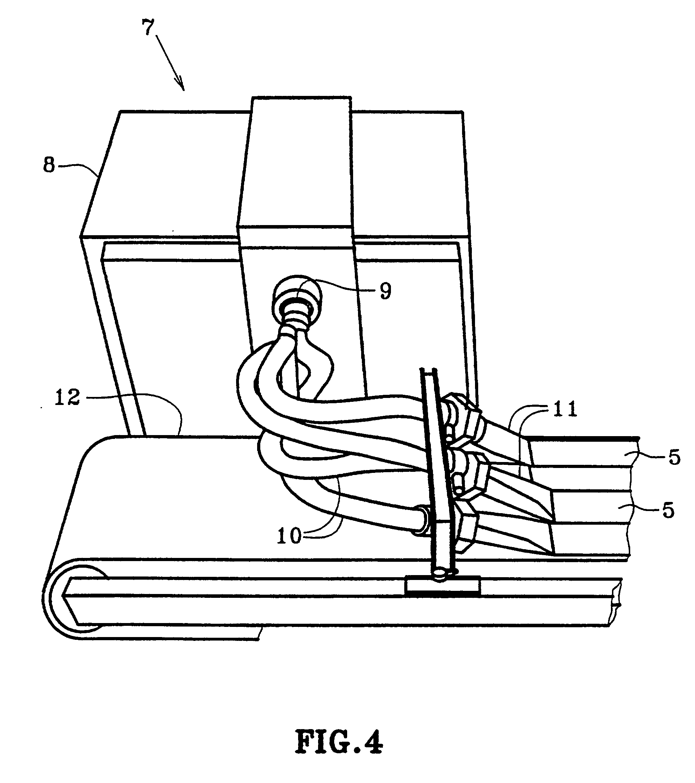

Sur la figure 4, on peut voir une extrudeuse 7 comportant par exemple un poussoir à viande 8 de type connu, avantageusement dit sous vide, c'est-à-dire un poussoir assurant la désaération de la pâte de la mêlée au cours de l'opération de poussage et dont la sortie 9 alimente par l'intermédiaire des canalisations 10, une ou plusieurs têtes d'extrusion 11. Dans l'exemple non limitatif illustré, la sortie 9 du poussoir 8 est connectée par quatre canalisations souples à quatre têtes d'extrusion identiques inclinées vers un tapis 12 dont le défilement est synchronisé avec l'extrusion de la mêlée. Le tapis peut être soit plein soit ajouré et, il peut recevoir un traitement anti-adhérant compatible avec les règles d'hygiène de l'industrie alimentaire.

Le tableau 4 donne le rapport R de surface sur le volume des bandes 5 de mêlée selon l'invention présentant le même volume que les saucisses sèches traditionnelles donné dans le tableau 1.

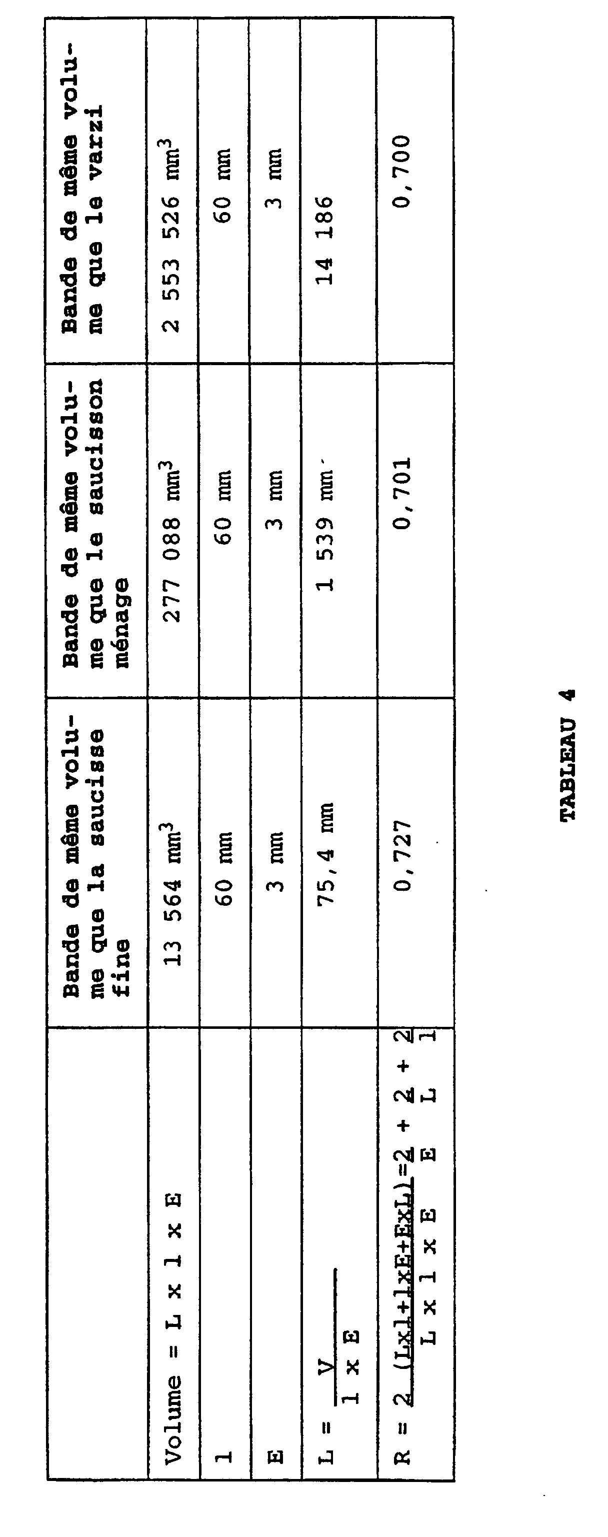

En 13 (figure 3), on découpe la ou les bandes 5 à des longueurs L correspondant à l'équipement nécessaire à la suite du traitement. Par exemple, la longueur L correspond à la longueur des claies supportant les bandes 5 au cours de traitements ultérieurs.

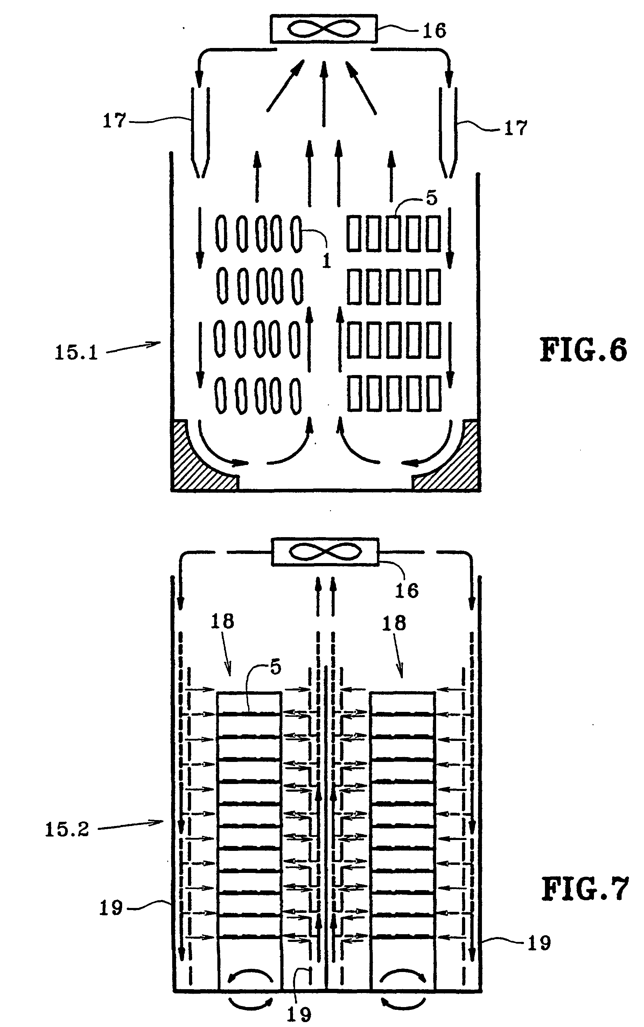

Il peut s'avérer avantageux d'effectuer la cuisson en 14 du produit extrudé sous forme de bandes 5. Par exemple, on peut extruder des bandes 5 de pâte à pain qui, après fermentation, subiront une cuisson dans le four 14. Au contraire, les bandes 5 de saucisson subiront une sèche à l'étape 15 de dessiccation. Avantageusement, la fermentation de la mêlée s'effectue dans une étuve au début du processus de dessiccation. On peut, par exemple, mettre en oeuvre une étuve classique 15.1 à flux d'air verticaux telle qu'illustrée sur la figure 6 ou avantageusement d'une étuve 15.2 à flux d'air horizontaux, spécialement conçue à cet effet, telle qu'illustrée sur la figure 7. Les étuves 15.1 et 15.2 sont équipées de moyens non illustrés de régulation de l'hydrométrie et de la température ainsi que des moyens 16 de circulation d'air.

Dans l'étuve 15.1, l'air est injecté par des moyens 17 vers le bas pour remonter verticalement entre les saucisses 1 de type traditionnel ou les bandes 5. Au contraire, l'étuve 15.2 selon l'invention comporte des moyens 18, notamment des piles de claies pour disposer à l'horizontale des bandes 5 ainsi que les moyens 19 disposés entre des moyens 18 permettant de créer des flux d'air laminaires horizontaux affleurant la surface des bandes 5 ou des flux d'air tangents à ladite surface. Les moyens 19 comportent par exemple des parois disposées en vis-à-vis comportant des buses ou des rampes de soufflage. Avantageusement, des moyens permettent d'inverser le sens de circulation de l'air entre les moyens 19 disposés en vis-à-vis.

Sur la figure 7, on a représenté par des flèches en traits pleins la circulation dans un premier sens et par des flèches en pointillé la circulation en sens inverse. Les faces principales des bandes 5 forment une surface d'échange importante avec les flux d'air permettant une dessiccation rapide des bandes avant l'apparition d'une flore de surface. Les bandes 5 forment donc un saucisson sec présentant un état de propreté visuel et biologique de la surface correspondant à l'état de propreté d'une tranche de saucisson à consommer tel quel. Cet état de propreté biologique permet d'assurer une très bonne conservation du produit et notamment un conditionnement en emballage étanche à la vapeur d'eau et au gaz. L'étuvage et la dessiccation peuvent être améliorés par une rotation de 180° d'axe vertical des moyens 18. Par exemple, pour un séchage et étuvage de 48 heures, on effectue une rotation toutes les 12 heures.

Les bandes 5 séjournent avantageusement dans l'étuve entre 10 et 72 heures. Par exemple pour une épaisseur E égale à 3 mm, ce temps est égal à 24 heures ; pour une épaisseur E égale à 4 mm, ce temps est égal à 36 heures ; pour une épaisseur E égale à 6 mm, ce temps est égal à 48 heures ; pour une épaisseur E égale à 7 mm, ce temps est égal à 60 heures.

Lors du séjour en salle d'étuvage, les bandes de saucisson 5 subissent une fermentation acide suivie d'une dessiccation avec perte de poids. Avantageusement, l'acidification par les ferments lactiques de la mêlée s'effectue à une température comprise entre 18 et 25° C.

L'acidification du produit entraîne le phénomène de coagulation des protéines principalement solubles, ce qui assure la liaison de la pâte sur elle-même, c'est-à-dire une liaison des grains de la mêlée entre eux. Ce phénomène est appelé "prise à l'étuvage".

Une bande 5 fermentée présente une coloration plus foncée et un raffermissement plus sensible de la texture ainsi qu'une baisse de la valeur du pH comprise par exemple entre 0,2 et 0,8. La valeur de la baisse du pH augmente avec la taille des pièces des mêlées. Lors de la dessiccation, les bandes 5 de saucisson perdent typiquement de 40 à 45 % de leur poids de départ. C'est l'ensemble des opérations d'acidification de coagulation à l'étuvage et de dessiccation pendant l'étuvage, puis complété par une étape de séchage qui donnera au produit toute sa cohésion permettant une découpe en bandes ou tranches.

On coextrude une bande 5' composée d'une pluralité de bandes 5.4, 5.5 et 5.6 juxtaposées (figure 5) ou superposées (non illustrées) à partir d'une pluralité de mêlées de nature différente capables de se souder entre elles. Dans l'exemple de la figure 5, un premier poussoir 8 alimente en une mêlée grasse deux filières latérales de coextrusion 11.1 et 11.3. Un second poussoir 8 alimente en une mêlée maigre une filière de coextrusion 11.2 centrale. La bande 5' comporte donc une bande de mêlées maigres 5.2 disposée entre deux bandes de mêlées plus grasses 5.1 et 5.3. En cas de superposition des mêlées de nature différente, il est avantageux de limiter l'épaisseur de chaque couche pour ne pas augmenter exagérément le temps de dessiccation.

II est bien entendu que la présente invention n'est nullement limitée à l'extrusion de bandes planes, tout profilé extrudé ou coextrudé présentant un rapport R exprimé en mm supérieur ou égal à 0,4, de préférence supérieur ou égal à 0,5, par exemple égal à 0,7, à 1, à 1,5 ou à 2, ne sort pas du cadre de la présente invention.

On peut, par exemple, extruder des profilés présentant une section en forme de L, en forme de O (tubes), en forme de U, en forme de V, en forme de X, en forme de Y, en forme d'un polygone creux régulier ou non.

Les profilés tubulaires ont par exemple une épaisseur comprise entre 2 et 5 mm et un diamètre interne compris entre 6 et 15 mm et un diamètre externe compris entre 10 et 20 mm. Par exemple l'épaisseur E des tubes de mêlée extrudés ayant un diamètre interne de 10 mm et un diamètre externe de 14 mm ou un diamètre interne de 15 mm et un diamètre externe de 19 mm est égale à 2 mm, alors que celle d'un tube ayant un diamètre interne de 10 mm et un diamètre externe de 20 mm est égale à 5 mm. Il est à noter que les profilés creux, tubulaires ou polygonaux peuvent, suivant la composition de la mêlée, s'écraser partiellement, sans pour autant compromettre la dessiccation du produit alimentaire, notamment du saucisson.

Un profilé 5 selon l'invention peut être aromatisé à l'étape 20 (figure 3) après l'étape de sèche. On peut par exemple conférer divers goûts à des bandes ayant un goût neutre sans addition d'ingrédients dans la mêlée de départ par vaporisation ou pulvérisation d'un arôme, par exemple naturel ayant le goût recherché pour le produit. Avantageusement, les arômes sont concentrés et préparés sur des supports très peu aqueux. Dans un tel cas, il est possible d'aromatiser le produit final juste avant un dernier découpage 21 et l'emballage 22. Cette vaporisation et pulvérisation ne sont pas de nature à réhumidifier sensiblement les bandes 5. La vaporisation et la pulvérisation peuvent avantageusement être effectuées sur les deux faces principales des bandes 5. L'imprégnation, la migration, l'homogénéisation de l'arôme déposé sur les faces principales de la bande de mêlée 5 sont assez rapides, notamment pour un produit conditionné en emballage étanche à la vapeur d'eau et au gaz.

Avantageusement, le traitement, le transport local et/ou la manutention jusqu'à l'emballage final des bandes 5, s'effectuent à l'horizontale. Toutefois, il est bien entendu que le traitement, le transport local ou la manutention, en pente ou à la verticale, ne sortent pas du cadre de la présente invention.

Les bandes 5 selon la présente invention ayant subi une dessiccation poussée avec perte d'eau en poids de 35 à 45 % correspondent à la définition du saucisson donnée dans le code des usages de la charcuterie-salaison. En variante, les bandes 5 peuvent subir une dessiccation moins poussée avec par exemple une perte d'humidité de 18 à 35 % en poids, notamment entre 18 et 25% en poids.

La présente invention s'applique notamment à l'industrie alimentaire.

La présente invention s'applique principalement à l'industrie de la salaison.

## Revendications

1. Procédé de fabrication d'un produit alimentaire comportant une étape d'extrusion d'un profilé non cylindrique présentant un rapport R de la surface exprimée en mm² sur le volume exprimé en mm³ supérieur ou égal à 0,4 suivie par une étape ultérieure de fermentation du produit de la bande extrudée (5), **caractérisé en ce que** l'étape d'extrusion est une étape de coextrusion d'une pluralité de mêlées de nature différente (5.4, 5.5, 5.6).

2. Procédé selon la revendication 1, **caractérisé en ce qu'**on coextrude une pluralité de bandes coplanaires qui, après solidarisation, forment une bande (5') de plus grande largeur I.

3. Procédé selon la revendication 1, **caractérisé en ce qu'**on coextrude une pluralité de bandes superposées formant une structure laminaire.

4. Procédé selon l'une quelconque des revendications précédentes, **caractérisé en ce que** le profilé extrudé forme une bande allongée (5) de grande longueur L et de faible épaisseur E comprise entre 2 mm et 10 mm.

5. Procédé selon l'une quelconque des revendications précédentes, **caractérisé en ce que** l'on extrude un produit à base de viande.

6. Procédé selon l'une quelconque des revendications précédentes, **caractérisé en ce qu'**il comporte une étape de dessiccation du profilé ou de la bande extrudé.

7. Procédé selon l'une quelconque des revendications précédentes, **caractérisé en ce que** la fermentation s'effectue dans une étuve.

8. Procédé selon la revendication 6 ou 7, **caractérisé en ce que** la dessiccation est obtenue par soufflage d'un flux d'air parallèlement et/ou tangentiellement à la surface d'au moins une des faces principales du profilé ou de la bande extrudé (5) disposées à l'horizontale.

9. Procédé selon l'une quelconque des revendications 6 à 8, **caractérisé en ce que** les étapes de fermentation et de dessiccation ont une durée comprise entre 10 et 72 heures, de manière à éviter l'apparition d'une flore de surface.

10. Procédé selon l'une quelconque des revendications précédentes, **caractérisé en ce qu'**il comporte en outre une étape de cuisson (14).

11. Procédé selon l'une quelconque des revendications précédentes, **caractérisé en ce que** ledit procédé est un procédé de fabrication en continue.

12. Produit alimentaire obtenu par découpe d'un profilé extrudé non cylindrique, dont le rapport R de sa surface exprimé en mm² à son volume exprimé en mm³ est supérieur ou égal à 0,4 de préférence compris entre 0,6 et 0,8, par exemple égal à 0,65 ou à 0,7 et dont la matière extrudée du profilé a subi une fermentation et/ou une acidification permettant son raffermissement, **caractérisé en ce que** la matière extrudée comprend une pluralité de produits (5.4, 5.5, 5.6) de natures différentes.

13. Produit alimentaire selon la revendication 12, **caractérisé en ce que** le profilé est une bande (5) de grande longueur L et de faible épaisseur E comprise entre 2 mm et 10 mm.

14. Produit alimentaire selon la revendication 13, **caractérisé en ce que** la bande de mêlée (5) a une épaisseur égale à 4 mm ou 7 mm.

15. Produit alimentaire selon l'une quelconque des revendications 12 à 14, **caractérisé en ce que** ledit produit est un saucisson.

16. Produit alimentaire selon la revendication 15, **caractérisé en ce que** ledit saucisson est un saucisson sec ayant subi une dessiccation avec perte d'humidité de 35 à 45 % en poids.

17. Produit alimentaire selon la revendication 15, **caractérisé en ce que** ledit saucisson est un saucisson mi-sec ayant subi une dessiccation avec perte d'humidité de 18 à 25 % en poids.

18. Produit alimentaire selon l'une quelconque des revendications 15 à 17, **caractérisé en ce qu'**il est dépourvu de flores de surface.

19. Produit alimentaire selon la revendication 18, **caractérisé en ce qu'**il n'est pas recouvert d'une peau ou d'un boyau.

20. Produit alimentaire selon la revendication 18 ou 19, **caractérisé en ce qu'**il est emballé sous vide ou sous un gaz neutre dans un emballage étanche

## Claims

1. Process for manufacturing a food product comprising a step of extruding a non-cylindrical profile having a ratio R of the surface area expressed in mm² to the volume expressed in mm³ greater than or equal to 0.4, followed by a subsequent step of fermentation of the product of the extruded strip (5), **characterised in that** the extrusion step is a step of coextrusion of a plurality of mixtures of different kinds (5.4, 5.5, 5.6).

2. Process according to claim 1, **characterised in that** a plurality of coplanar strips are coextruded, which, after integration, form a strip (5') of greater width 1.

3. Process according to claim 1, **characterised in that** a plurality of superimposed strips are coextruded, forming a laminated structure.

4. Process according to any one of the preceding claims, **characterised in that** the extruded profile forms an elongate strip (5) of considerable length L and limited thickness E between 2 mm and 10 mm.

5. Process according to any one of the preceding claims, **characterised in that** a meat-based product is extruded.

6. Process according to any one of the preceding claims, **characterised in that** it comprises a step of drying the profile or the extruded strip.

7. Process according to any one of the preceding claims, **characterised in that** the fermentation is carried out in a drying chamber.

8. Process according to claim 6 or 7, **characterised in that** the drying is effected by blowing a current of air parallel and/or at a tangent to the surface of at least one of the main sides of the profile or extruded strip (5) which are disposed horizontally.

9. Process according to any one of claims 6 to 8, **characterised in that** the fermentation and drying steps have a duration of between 10 and 72 hours, so as to avoid the appearance of surface flora.

10. Process according to any one of the preceding claims, **characterised in that** it further comprises a cooking step (14)

11. Process according to any one of the preceding claims, **characterised in that** the process is a continuous production process.

12. Food product obtained by cutting up a non-cylindrical extruded profile, wherein the ratio R of its surface area expressed in mm² to its volume expressed in mm³ is greater than or equal to 0.4, preferably between 0.6 and 0.8, for example equal to 0.65 or 0.7, and wherein the extruded material of the profile has undergone fermentation and/or acidification allowing it to harden, **characterised in that** the extruded matter comprises a plurality of products (5.4, 5.5, 5.6) of different kinds.

13. Food product according to claim 12, **characterised in that** the profile is a strip (5) of considerable length L and limited thickness E of between 2 mm and 10 mm.

14. Food product according to claim 13, **characterised in that** the strip of mixture (5) has a thickness of 4 mm or 7 mm.

15. Food product according to one of claims 12 to 14, **characterised in that** the product is a sausage.

16. Food product according to claim 15, **characterised in that** the sausage is a dry sausage which has undergone drying with a moisture loss of 35 to 45% by weight.

17. Food product according to claim 15, **characterised in that** the sausage is a semi-dry sausage which has undergone drying with a moisture loss of 18 to 25% by weight.

18. Food product according to any one of claims 15 to 17, **characterised in that** it is free from surface flora.

19. Food product according to claim 18, **characterised in that** it is not covered by a skin or casing.

20. Food product according to claim 18 or 19, **characterised in that** it is packaged under vacuum or in a neutral gas in a sealed pack.

## Patentansprüche

1. Verfahren zur Herstellung eines Nahrungsmittels, einen Schritt umfassend, ein nicht zylindrisches Profil zu extrudieren, das ein Verhältnis R der in mm² ausgedrückten Oberfläche zum in mm³ ausgedrückten Rauminhalt hat, das größer oder gleich 0,4 ist. gefolgt von einem nachfolgenden Fermentierungsschritt des extrudierten Streifens (5), **dadurch gekennzeichnet, dass** der Extrudierschritt ein Schritt des gleichzeitigen Extrudierens einer Mehrzahl an Gemischen unterschiedlicher Art ist (5.4, 5.5, 5.6).

2. Verfahren nach Anspruch 1, **dadurch gekennzeichnet, dass** gleichzeitig eine Mehrzahl an koplanaren Streifen extrudiert wird, die nach dem Festwerden einen Streifen (5') größerer Breite I bilden.

3. Verfahren nach Anspruch 1, **dadurch gekennzeichnet, dass** gleichzeitig eine Mehrzahl an übereinanderliegenden Streifen extrudiert wird, die eine Schichtstruktur bilden.

4. Verfahren nach einem der vorhergehenden Ansprüche, **dadurch gekennzeichnet, dass** das extrudierte Profil einen langgestreckten Streifen (5) mit einer großen Länge L und einer geringen Dicke E von 2 bis 10 mm bildet.

5. Verfahren nach einem der vorhergehenden Ansprüche, **dadurch gekennzeichnet, dass** ein Produkt auf Fleischbasis extrudiert wird.

6. Verfahren nach einem der vorhergehenden Ansprüche, **dadurch gekennzeichnet, dass** es einen Schritt umfasst, das Profil oder den extrudierten Streifen zu trocknen.

7. Verfahren nach einem der vorhergehenden Ansprüche, **dadurch gekennzeichnet, dass** die Fermentierung in einem Wärmeschrank stattfindet.

8. Verfahren nach Anspruch 6 oder 7, **dadurch gekennzeichnet, dass** das Trocknen erreicht wird, indem ein Luftstrom parallel zur und/oder tangential auf die Oberfläche mindestens einer der in der Horizontalen angeordneten Hauptflächen des Profils oder des extrudierten Streifens (5) geblasen wird.

9. Verfahren nach einem der Ansprüche 6 bis 8, **dadurch gekennzeichnet, dass** die Fermentierungs- und Trocknungsschritte eine Dauer von 10 bis 72 Stunden haben, um das Entstehen einer Oberflächenflora zu vermeiden.

10. Verfahren nach einem der vorhergehenden Ansprüche, **dadurch gekennzeichnet, dass** es darüber hinaus einen Kochschritt (14) umfasst.

11. Verfahren nach einem der vorhergehenden Ansprüche, **dadurch gekennzeichnet, dass** das Verfahren ein kontinuierliches Herstellungsverfahren ist.

12. Nahrungsmittel. das durch Abschneiden eines extrudierten, nicht zylindrischen Profils erhalten wird. dessen Verhältnis R seiner in mm² ausgedrückten Oberfläche zum in mm³ ausgedrückten Rauminhalt größer oder gleich 0,4 ist, vorzugsweise 0,6 bis 0,8, beispielsweise gleich 0.65 oder 0,7. und dessen aus dem Profil extrudierte Substanz eine Fermentierung und/oder Säuerung erfahren hat, die seine Verfestigung ermöglicht, **dadurch gekennzeichnet, dass** die extrudierte Substanz eine Mehrzahl an Gemischen unterschiedlicher Arten umfasst (5.4. 5.5, 5.6).

13. Nahrungsmittel nach Anspruch 12, **dadurch gekennzeichnet, dass** das extrudierte Profil ein langgestreckter Streifen (5) mit einer großen Länge L und einer geringen Dicke E von 2 bis 10 mm ist.

14. Nahrungsmittel nach Anspruch 13, **dadurch gekennzeichnet, dass** der Gemischstreifen (5) eine Dicke von 4 mm oder 7 mm hat.

15. Nahrungsmittel nach einem der vorhergehenden Ansprüche 12 bis 14, **dadurch gekennzeichnet, dass** das Nahrungsmittel eine Wurst ist.

16. Nahrungsmittel nach Anspruch 15, **dadurch gekennzeichnet, dass** die Wurst eine Trockenwurst ist, die eine Trocknung mit einem Feuchteverlust von 35 bis 45 Gew.-% erfahren hat.

17. Nahrungsmittel nach Anspruch 15, **dadurch gekennzeichnet, dass** die Wurst eine halbtrockene Wurst ist, die eine Trocknung mit einem Feuchteverlust von 18 bis 25 Gew.-% erfahren hat.

18. Nahrungsmittel nach einem der vorhergehenden Ansprüche 15 bis 17, **dadurch gekennzeichnet. dass** es frei von Oberflächenflora ist.

19. Nahrungsmittel nach Anspruch 15, **dadurch gekennzeichnet, dass** es nicht mit einer Haut oder einem Darm überzogen ist.

20. Nahrungsmittel nach Anspruch 18 oder 19, **dadurch gekennzeichnet, dass** es vakuumverpackt oder in einer dichten Verpackung unter neutralem Gas verpackt ist.
